# EUROPEAN PATENT APPLICATION

(11) **EP 4 703 961 A1**
(43) Date of publication of application: **04.03.2026**
(21) Application number: 24796684.9
(22) Date of filing: 27.03.2024
(51) Int. Cl.: G06F 40/166, G06F 40/56

(54) **MODIFICATION SUGGESTION METHOD, MODIFICATION SUGGESTION SYSTEM, AND MODIFICATION SUGGESTION PROGRAM**

(30) Priority: 25.04.2023 US 202363498186 P
(71) Applicant: Legalon Technologies, Inc., Tokyo 150-6219 (JP)
(72) Inventor: WATANABE, Ryo, Tokyo 150-6219 (JP); MORI, Takafumi, Burlingame, California 94010 (US); KURODA, Yuta, Tokyo 150-6219 (JP)
(74) Representative: Hoffmann Eitle
(86) International application number: PCT/JP2024/012359
(87) International publication number: WO 2024/224926

(57) **Abstract**

To provide a highly convenient modification proposal.

A modification proposal method executed by a processor includes: generating, based on target document unit information obtained by dividing review target document information to be reviewed into predetermined units and modification proposal information regarding a modification proposal for the target document unit information, prompt information for generating modified document unit information according to the modification proposal, and outputting the prompt information to an external information processing system; and acquiring the modified document unit information generated according to the prompt information from the external information processing system.

## Description

### Technical Field

The present invention relates to a modification proposal method, a modification proposal system, and a modification proposal program.

### Background Art

Conventionally, a method for simplifying modification of a document by utilizing computer technology is known.

For example, an information processing apparatus described in Patent Literature 1 includes a detection unit, a notification unit, and a presentation unit. The detection unit detects that a first item has been edited, and the notification unit notifies an operator of an instruction to edit a second item corresponding to the detected first item to be edited. Then, when information before editing stored in the storage unit storing the information before editing and information after editing is within information of the second item to be edited, the presentation unit presents the information after editing corresponding to the information before editing as an editing candidate.

### Citation List

### Patent Literature

Patent Literature 1: JP 2013-058168 A

### Summary of Invention

### Technical Problem

However, the information processing apparatus described in Patent Literature 1 merely displays an editing candidate of the second item in response to editing of the first item. Therefore, a user needs to draft a modified sentence by himself/herself by referring to the displayed editing candidate, and convenience of the user is limited.

Therefore, an object of an embodiment of the present invention is to make a highly convenient modification proposal possible.

### Solution to Problem

A modification proposal method according to an embodiment of the present invention is a modification proposal method executed by a processor, the method including: generating, based on target document unit information obtained by dividing review target document information to be reviewed into predetermined units and modification proposal information regarding a modification proposal for the target document unit information, prompt information for generating modified document unit information according to the modification proposal, and outputting the prompt information to an external information processing system; and acquiring the modified document unit information generated according to the prompt information from the external information processing system.

### Advantageous Effects of Invention

According to an embodiment of the present invention, a highly convenient modification proposal is possible.

### Brief Description of Drawings

Fig. 1 is a diagram illustrating an outline of processing in a modification proposal system 100 according to an embodiment of the present invention.
Fig. 2 is a diagram illustrating a configuration of the modification proposal system 100 according to the embodiment of the present invention.
Fig. 3 is a diagram illustrating an example of target document management information stored in a storage unit 110.
Fig. 4 is a diagram illustrating an example of modification proposal information stored in the storage unit 110.
Fig. 5 is a diagram illustrating an example of modified document management information stored in the storage unit 110.
Fig. 6 is a diagram illustrating an example of first display information displayed on a user terminal 200.
Fig. 7 is a diagram illustrating an example of second display information displayed on the user terminal 200.
Fig. 8 is a flowchart illustrating an example of processing in the modification proposal system 100.
Fig. 9 is a diagram illustrating an example of a hardware configuration of a computer 900.

### Description of Embodiments

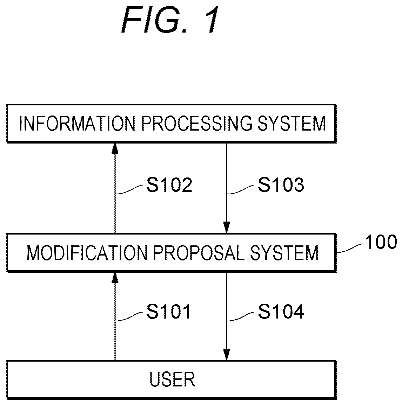

An embodiment will be described with reference to the attached drawings. Fig. 1 is a diagram illustrating an outline of processing in a modification proposal system 100 according to an embodiment.

The modification proposal system 100 is an information processing system implemented by a modification proposal program. The modification proposal system 100 outputs, based on target document unit information obtained by dividing review target document information into predetermined units and modification proposal information for modifying the target document unit information, modified document unit information according to the modification proposal through transmission and reception with an external information processing system using prompt information.

First, the modification proposal system 100 acquires target document unit information, for example, from a user (S101). The modification proposal system 100 acquires modification proposal information based on the target document unit information. Here, the modification proposal information may be, for example, information generated by the modification proposal system 100 or information generated by another information processing system.

Subsequently, the modification proposal system 100 generates prompt information for generating modified document unit information according to the modification proposal based on the target document unit information and the modification proposal information, and outputs the prompt information to an external information processing system (S102). The modification proposal system 100 acquires modified document unit information generated according to the prompt information from the external information processing system (S103).

Then, the modification proposal system 100 provides the modified document unit information to the user (S104). The user obtains a document modified based on the modified document unit information.

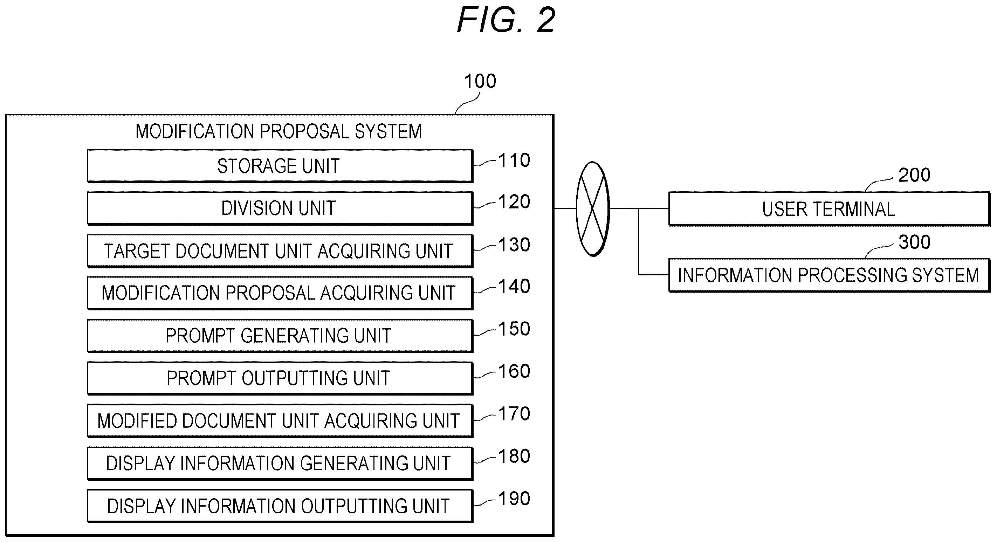

Fig. 2 is a diagram illustrating a configuration of the modification proposal system 100 according to the embodiment of the present invention. The modification proposal system 100 is communicably connected to a user terminal 200 and an information processing system 300 via a network such as the Internet. Details of the modification proposal system 100 will be described later.

The user terminal 200 is a computer used by a user of the modification proposal system 100, and is a smartphone, a tablet terminal, a personal computer, or the like.

The user accesses the modification proposal system 100 using the user terminal 200, and provides, for example, target document unit information to the modification proposal system 100. In addition, the user accesses the modification proposal system 100 using the user terminal 200, and acquires modified document unit information. The user modifies the target document unit information by referring to the modified document unit information.

The information processing system 300 is an information processing system that outputs modified document unit information by a predetermined technique (for example, a natural language processing technique or a machine learning technique) based on prompt information acquired from the modification proposal system 100.

The information processing system 300 may be, for example, an information processing system that generates modified document unit information based on a trained model, specifically, prompt information and a large language model. More specifically, the information processing system 300 may be, for example, a machine learning model called a large language model (LLM), for example, a bidirectional encoder representations from transformers (BERT) or a generative pre-trained transformer (GPT), particularly, ChatGPT or GPT-4. The information processing system 300 can implement its function by a predetermined hardware configuration, particularly, for example, by using a storage area or by a processor executing a program stored in the storage area.

In the information processing system 300, output information (for example, modified document unit information) largely varies depending on input prompt information. In addition, even when the same prompt information is input, output information may be different. Examples of a factor thereof include that a meaning of the same word or sentence can change depending on a context, that output information can depend on the content of learning information being learned by the information processing system 300, that the output information can depend on various parameters in processing of the information processing system 300, that the output information can change depending on randomness unique to the information processing system 300 or use of a user (for example, evaluation by a user), and that the information processing system 300 uses learning information that can change from moment to moment.

Therefore, in order to acquire appropriate information from the information processing system 300, it is important to design and generate appropriate prompt information. The modification proposal system 100 generates and outputs prompt information capable of acquiring appropriate modified document unit information based on target document unit information and modification proposal information.

Note that, in Fig. 2, one user terminal 200 and one information processing system 300 are illustrated, but there may be a plurality of user terminals 200 and a plurality of information processing systems 300. In addition, one user may use a plurality of user terminals 200, and one user terminal 200 may be used by a plurality of users. For example, a user who provides target document unit information to the modification proposal system 100, a user who requests a review for the target document unit information, and a user who reviews the target document unit information and obtains modification proposal information or modified document unit information may be different from each other, and terminals used by the users may be different from each other. Note that the plurality of users may have different authorities. For example, a user who provides target document unit information to the modification proposal system 100 cannot use functions related to examination, editing, modification proposal, and approval, but a user who reviews the target document unit information may be able to use these functions.

Next, details of the modification proposal system 100 of the present embodiment will be described. The modification proposal system 100 includes a storage unit 110, a division unit 120, a target document unit acquiring unit 130, a modification proposal acquiring unit 140, a prompt generating unit 150, a prompt outputting unit 160, a modified document unit acquiring unit 170, a display information generating unit 180, and a display information outputting unit 190.

Each unit illustrated in Fig. 2 can be implemented, for example, by use of a storage area or by a processor executing a program stored in the storage area. In addition, processing in the units illustrated in Fig. 2 may be performed by one information processing apparatus (for example, a server), and at least a part of the processing may be performed by the user terminal 200. At least a part of the processing that can be performed by the user terminal 200 may be, for example, document creation processing or editing processing using a document creation function (editor function) provided by a predetermined information processing system (for example, the modification proposal system 100).

The storage unit 110 of the present embodiment stores information to be processed in the modification proposal system 100. The storage unit 110 can store, for example, review target document information, target document unit information, review criterion information, modification proposal information, prompt information, and modified document unit information, which will be described later.

The division unit 120 of the present embodiment divides document information to be reviewed (review target document information) into a plurality of pieces of target document unit information.

The modification proposal system 100 (for example, a review target document acquiring unit) first acquires the review target document information and stores the review target document information in the storage unit 110. The division unit 120 divides the review target document information into a plurality of pieces of target document unit information. The review target document will be described later.

The division unit 120 divides the review target document information into predetermined units. The predetermined units may include, for example, at least one of an article, a clause, a subclause, and a paragraph.

The target document unit acquiring unit 130 of the present embodiment acquires target document unit information obtained by dividing the review target document information into units, and stores target document management information regarding the target document unit information in the storage unit 110.

Here, in other words, the review is, for example, an inspection of electronic document information by a user. In this case, the review target document information is, for example, electronic document information to be reviewed by the user.

The electronic document information is modified as necessary and completed. For example, when the electronic document information is electronic document information of a business report, the business report is finalized through drafting by a person in charge of business and subsequent modification by a business manager (for example, a person in a higher position than the person in charge of business).

In addition, for example, when the electronic document information is electronic document information of a contract, one or both of contracting parties may inspect and modify the contract in agreement between the contracting parties. As an example, in a case of a contract between companies, for example, a legal department in charge of contract inspection inspects the content of the contract and modifies the contract as necessary. Note that the inspection may also be referred to as confirmation or examination.

The review target document information of the present embodiment may be, for example, electronic document information of a contract. The review target document information is, for example, electronic document information of a contract created by predetermined electronic document creation software, electronic document information obtained by digitizing a contract of a paper medium using a predetermined image analysis technique (for example, an optical character recognition (OCR) technique), or electronic document information generated by a template or a document creation function (editor function or the like) provided by the modification proposal system 100 or an external system or service. In addition, the contract to be processed by the modification proposal system 100 includes, for example, a provision, is a document that generates a predetermined legal effect, and includes an application form, a memorandum, and the like.

A language of the review target document information or the target document unit information may be, for example, electronic document information in Japanese, English, or other languages. In acquisition of the modification proposal information, it is preferable to automatically recognize a language related to the review target document information or the target document unit information and to acquire appropriate modification proposal information. For example, when the review target document information is electronic document information in Japanese, it is preferable to set a modification policy and prompt information such that modified document unit information in Japanese can be obtained, and when the review target document information is electronic document information in English, it is preferable to set the modification policy and the prompt information such that modified document unit information in English can be obtained. The language may be determined by a user or by analyzing the document in the modification proposal system.

The contract includes not only a contract agreed and concluded by both parties but also a contract that is being confirmed by both parties (that is, a draft of a contract), a contract that has been exchanged between the parties but has not reached agreement, and a template of a contract created for reference in a contract with another party. In the description of the present embodiment, unless otherwise specified, the contract includes not only a contract agreed by both parties but also a contract that is being confirmed by both parties (that is, a draft of a contract), a contract that has been exchanged between the parties but has not reached agreement, and a template of a contract created in a contract with another party. In the present embodiment, the review target document information may be a confirmed contract or a latest version contract, or may be a contract that is not the latest version.

The target document unit information of the present embodiment is electronic document information of a part of one contract, obtained by dividing one electronic document. That is, when the review target document information is a contract, the target document unit information may be electronic document information divided into one or a plurality of specific units (for example, an article, a clause, or a subclause). That is, the target document unit information may be electronic document information indicating a text or a sentence of a specific article. In addition, the target document unit information may be electronic document information indicating a unit such as a matrix or a cell in a diagram or a table included in a memorandum of change, an attachment, or a written document related to a contract.

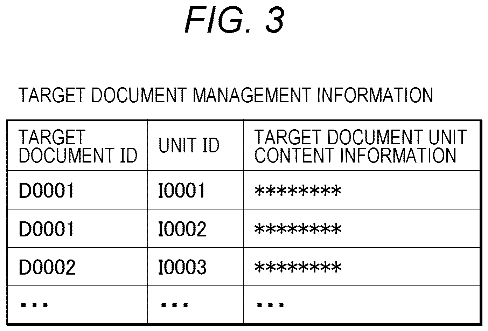

Fig. 3 is a diagram illustrating an example of target document management information stored in the storage unit 110. The target document management information stored in the storage unit 110 includes, for example, a target document ID, a unit ID, and target document unit content information. The target document ID is information for identifying the review target document information processed by the modification proposal system 100. The unit ID is information for identifying a unit included in the review target document information. The target document unit content information is information indicating the content of the target document unit information (for example, text described in the target document unit information).

Note that the target document management information may include attributes of a contract, for example, a position of a user in the contract, the type of the contract, a party of the contract, the name of a person in charge, a reception date and time, a last update date, the person in charge, and the like. The target document management information may be information input in association with the target document unit information by being input when prior information for review or the target document unit information is received in the modification proposal system, or may be information obtained by analyzing the target document unit information.

For example, the target document unit acquiring unit 130 may acquire the target document unit information from the user terminal 200, or may acquire the target document unit information divided by the division unit 120. In addition, for example, the target document unit acquiring unit 130 may acquire the target document unit information from a predetermined storage device such as a database according to an explicit instruction of a user.

Specifically, the modification proposal system 100 (particularly, for example, a review target document acquiring unit or the target document unit acquiring unit 130) may receive an upload of the review target document information or the target document unit information to the cloud through, for example, an email, a message, or a chat received from a user, or a so-called drag and drop operation by the user, and acquire the review target document information or the target document unit information. In addition, the modification proposal system 100 (particularly, for example, a review target document acquiring unit or the target document unit acquiring unit 130) may manage the acquired review target document information or target document unit information for each case (for example, a virtual folder) according to an analysis result obtained by analyzing each piece of electronic document information or a user's instruction.

Note that the target document unit information of the present embodiment is, for example, obtained by dividing the review target document information into certain units. In this way, by using the target document unit information as a unit obtained by dividing the document by the modification proposal system, a user does not select the target document unit information to be input to the information processing system 300 (for example, LLM), whereby the user can easily input a range appropriate for modification.

The division of the review target document information may be performed before the modification proposal. For example, the division may be performed immediately after the review target document information is received by and stored in the modification proposal system. In addition, the division may be performed in a system different from the modification proposal system 100, and the divided review target document information or target document unit information may be transmitted to or stored in the modification proposal system 100.

The modification proposal acquiring unit 140 of the present embodiment acquires modification proposal information regarding a modification proposal for the target document unit information, and stores modification proposal management information regarding the modification proposal information in the storage unit 110.

The modification proposal information is information that proposes modification of the content of the target document unit information. The modification proposal information includes, for example, information indicating a portion to be modified in the target document unit information and information regarding a modification policy in the portion.

Here, the information indicating a portion to be modified may be, for example, information indicating a position (for example, a page number or a line number) in the target document unit information. In addition, the information indicating a portion to be modified may be information indicating a unit (for example, article No. or clause No.) in the target document unit information, or information or a character string indicating a tag generated based on the content or the like of the target document unit information.

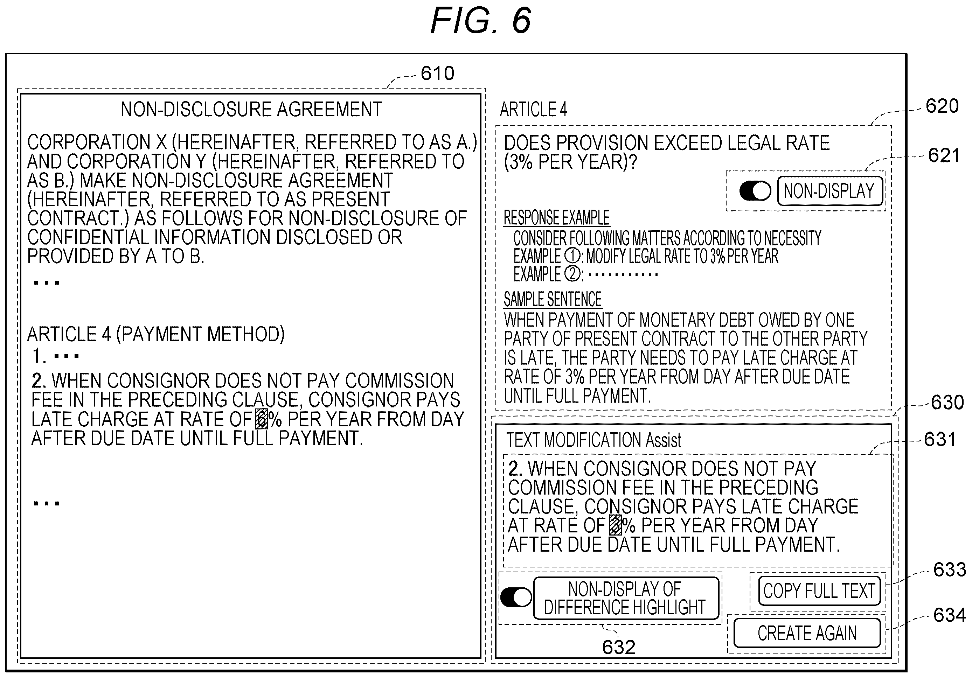

The information regarding a modification policy may be, for example, information indicating a modification directionality. That is, the modification proposal information may be, for example, information for pointing out a risk, omission of description, typographical errors, and the like of a description content in the current target document unit information to a user and prompting the user to perform a modification. In addition to a check point including an indication from a legal viewpoint, such as "Does the provision exceed the legal rate (3% per year)?" in Fig. 6, the modification proposal information may include a sentence of a response example for instructing how to specifically modify or delete words, for example, an instruction such as "modification to fall below the legal rate of 3% per year". As a result, it is possible to appropriately obtain the modification proposal information.

In addition, the information regarding a modification policy may include, for example, information indicating a sample sentence corresponding to the modification policy. The sample sentence may be, for example, a fixed phrase (a so-called template) having an ideal content corresponding to the modification policy.

In addition, the information regarding a modification policy may be post-modification content information indicating a content after modification of electronic document information different from the target document unit information. Here, the electronic document information different from the target document unit information may be, for example, electronic document information similar to the target document unit information. That is, the post-modification content information can be similar to modified document unit information obtained by modifying the target document unit information according to the modification proposal information, and therefore can function as information regarding a modification policy for the user.

Note that the information regarding a modification policy may be stored in a database in association with, for example, information indicating a portion to be modified or information indicating the content of the target document unit information to be modified.

When the target document unit information is electronic document information indicating a text of a specific article, the modification proposal information may be modification proposal information corresponding to the specific article. In addition, the modification proposal information may be modification proposal information corresponding to target document unit information of a part such as a clause or a word including a pointed matter in the document.

The modification proposal information may be generated, for example, in a predetermined information processing system (for example, a modification proposal information generating system). The modification proposal information generating system may be included in the modification proposal system 100, or may include the modification proposal system 100.

In an embodiment, the modification proposal information may be generated based on a result of an inspection performed on the review target document information based on review criterion information.

When the electronic document information is contract information, the modification proposal information generating system may store the review criterion information. The review criterion information may be, for example, a database that stores information necessary for modification proposal, for example, a rule that associates a character string or a condition considered to indicate a legal viewpoint or a risk with a modification policy.

In addition, the review criterion information may be a trained model that has learned general legal viewpoints such as various types of contract information, related laws, and judicial examples in advance, and has learned such that a noteworthy viewpoint including a risk can be detected, or an output thereof. Furthermore, the review criterion information may be ideal contract information (a so-called template agreement) for a specific user, a document related to knowledge, such as a document called a playbook or the like indicating an examination policy of a contract in a user, a check list, a comment regarding past cases, or the like, a model that has learned a user's preferences such as past modification cases in the user, or an output thereof. The plurality of trained models corresponding to the user may be provided separately from a trained model that has learned a general legal viewpoint.

The trained model may output modification proposal information, but may also output information indicating, for example, whether the trained model has a specific legal risk. In this case, the trained model may include a database with which an appropriate modification policy is associated according to an output.

By using modification proposal information generated based on such a model as described above, the modification proposal system 100 can acquire modified document unit information with high quality as a modified document while further following a demand of an individual user when generating modified document unit information through the information processing system 300 described later, and can improve accuracy through so-called fine tuning. Note that the database and the trained model may be used in combination. As a result, the description content of the target document unit information can be evaluated with higher accuracy, and the modification proposal information can be generated.

The modification proposal information generating system analyzes the target document unit information based on the review criterion information such as a database and/or a trained model in such a modification proposal information generating system, and evaluates the description content of the target document unit information based on, for example, a difference between ideal contract document information and the target document unit information or a difference between vectors of sentences. Then, the modification proposal information generating system generates modification proposal information for the target document unit information.

Note that the modification proposal information may be generated by an information processing system outside the modification proposal system 100, particularly an information processing system including a general-purpose large language model. For example, even with a general-purpose large language model, for example, when document information of a contract is transmitted as an input together with prompt data "output a legal risk included in a text of the following contract", it may be possible to obtain modification proposal information accurate to some extent as an output. This information processing system may be the same as the information processing system 300 described later.

Note that the content and the generation method of the modification proposal information are not limited to the above. In addition, one piece of modification proposal information may correspond to one piece of target document unit information, and a plurality of pieces of modification proposal information may correspond to one piece of target document unit information.

Note that a plurality of pieces of target document unit information may be included in one piece of review target document information (for example, a contract). For example, different pieces of modification proposal information (so-called pointing out to a user by a computer with respect to a text to be reviewed) may be generated for a plurality of texts defining different contents in one contract, respectively. The plurality of pieces of target document unit information may be units obtained by dividing one document described above into appropriate units, for example, articles, clauses, subclauses, paragraphs, and the like of a contract or a provision. As a result, the number of portions to be modified included in one piece of target document unit information is reduced, one modification proposal easily corresponds to one piece of target document unit information, and an output of the modified document unit information by the information processing system 300 is stabilized. In addition, a portion to be modified and input to the information processing system 300 can have an appropriate length, and the output of the modified document unit information by the information processing system 300 is stabilized. In addition, since an article, a clause, or a subclause of a contract or a provision is often set separately depending on a legal viewpoint, the modification proposal information generating system can generate appropriate modification proposal information for each legal viewpoint, and the modification proposal system 100 can acquire appropriate modified document unit information from the information processing system 300.

The modification proposal information of the present embodiment is not document information (modified document unit information described later) itself obtained by modifying the target document unit information, but is, for example, information or a fixed phrase indicating a modification directionality. As described above, the modification proposal system 100 outputs prompt information generated based on information (in this case, modification proposal information) determined in advance and stored to the information processing system 300, whereby the information processing system 300 can execute processing of generating the modified document unit information while reducing an influence of another system. In addition, a user can inspect document information based on a modification policy predetermined by the user or an expert who inspects the document (for example, a qualified person such as an attorney in a case of a legal document) through processing of the modification proposal system 100 and the modification proposal information generating system. However, when such information determined in advance is used, the user needs to refer to the target document unit information and the modification proposal information, to grasp a modification proposal indicated by the modification proposal information, and to create a sentence in which the target document unit information is modified by the user him/herself. Therefore, the modification proposal system 100 acquires the modified document unit information through transmission/reception processing with the information processing system 300.

In addition, the modification proposal information may further include classification information indicating the degree of importance, the presence or absence of favorite registration by the user, or the like. In addition, a button for switching between display and non-display of the modification proposal information according to the classification may be displayed in an area 620 in which the modification proposal information is displayed, which will be described later. That is, for example, the modification proposal system 100 can display only the modification proposal information registered as a favorite by the user in the area 620.

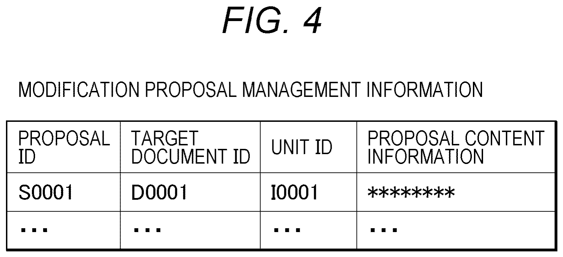

Fig. 4 is a diagram illustrating an example of modification proposal management information stored in the storage unit 110. The modification proposal management information stored in the storage unit 110 includes, for example, a proposal ID, a target document ID, a unit ID, and proposal content information. The proposal ID is information for identifying modification proposal information to be processed in the modification proposal system 100. The proposal content information is information indicating the content (for example, a modification portion and a modification policy, a sample sentence, or a modification style) of the modification proposal information.

The prompt generating unit 150 of the present embodiment generates prompt information for generating modified document unit information according to a modification proposal based on the target document unit information and the modification proposal information, and stores the prompt information in the storage unit 110. This prompt information is transmitted to the information processing system 300 according to a user's instruction, for example, clicking a button for acquiring the modified document unit information, the button being displayed on a screen.

For example, the prompt information is information that causes the information processing system 300 to generate modified document unit information according to a modification proposal when the prompt information is input to the information processing system 300. That is, the prompt information is so-called information indicating an imperative sentence for causing the information processing system 300 to generate the modified document unit information.

Here, the information processing system 300 is, for example, an information processing system that generates text information based on a large language model. When receiving an input of the prompt information, the information processing system 300 inputs the prompt information to the large language model, generates modified document unit information, and outputs the modified document unit information to the modification proposal system 100.

In addition, the prompt generating unit 150 can generate prompt information according to at least one modification style included in a plurality of modification styles.

Here, the modification style may be, for example, "modification based on past cases", "modification based on artificial intelligence (AI)", "modification to unify notations", "modification advantageous to one's own company", or "neutral modification". The "modification based on past cases" is, for example, a modification style of performing a modification according to past modification cases. In addition, the "modification based on AI" is, for example, a modification style of performing a flexible modification using AI without being bound by past modification cases. In addition, the "modification to unify notations" is a modification style of performing a modification to unify or correct variation in spelling, styles such as a respect style and a normal style, and the like included in generated modified document unit information. In addition, the "modification advantageous to one's own company" is a modification style of performing a modification for the purpose of making a content advantageous to one's own company being reviewed (for example, a contract content), and the "neutral modification" is a modification style of performing a modification for the purpose of making a neutral content (for example, a contract content). Note that the modification style is not limited thereto. For example, the modification style may relate to an applicable law, a venue, a country, or a region. For example, when an applicable law of a review target document is the Anglo-American law or when an agreed jurisdiction is the United States, it is preferable to exhaustively describe agreed matters of a contract, and therefore setting as a modification style is conceivable such that a sentence described in detail is output as compared with a case where the applicable law is the continental law such as the Japanese law or a case where the agreed jurisdiction is Japan. Note that such information related to a country, a region, an applicable law, or the like may be considered when the modification proposal information is generated. For example, the modification proposal system 100 or a user may determine an applicable law of a review target document, and modification proposal information according to a legal viewpoint in the applicable law may be generated.

The prompt generating unit 150 may generate, based on an operation of a user on a style selection area in second display information described later, prompt information according to the selected modification style.

In addition, the prompt generating unit 150 may generate the prompt information based on an operation of a user on a candidate selection area in the second display information described later.

Note that, in the prompt information generation processing in the prompt generating unit 150, a template of the prompt information is preferably prepared in advance. The template may include a general-purpose content (for example, "modify the following modification target sentence according to the following modification policy", and the like.) in prompt information output to the information processing system 300, or may be created and stored according to a modification policy, a legal viewpoint, or preference of a user. Preferably, the template of the prompt information is tested in advance, and has a content in which it is confirmed that modified document unit information with appropriate accuracy can be obtained. When the target document unit information is divided in advance into predetermined units as in the present embodiment, it is easy to apply a template of prompt information prepared in advance and further tested. This makes it easy to obtain appropriate modified document unit information.

Note that the prompt information may include the whole of the target document unit information, or may include only a part including a range necessary for outputting appropriate modified document unit information. The part including a range necessary for outputting appropriate modified document unit information can automatically determine a part including a legal viewpoint to be modified.

In addition, the prompt generating unit 150 can generate prompt information for generating modified document unit information over a plurality of units (for example, a plurality of articles). In this case, the prompt generating unit 150 may generate the prompt information, for example, based on at least one of target document unit information of the plurality of units, target document unit information of a unit before the plurality of units, and target document unit information of a unit after the plurality of units. More specifically, for example, the prompt generating unit 150 may generate prompt information indicating an imperative sentence for causing the information processing system 300 to generate a content to be described between units. A person skilled in the art can appropriately design an imperative sentence for generating a content to be described between units.

The prompt outputting unit 160 of the present embodiment outputs the prompt information generated by the prompt generating unit 150 to an external information processing system (for example, the information processing system 300).

At this time, the prompt outputting unit 160 may output prompt information according to at least one modification style included in a plurality of modification styles.

In addition, the prompt outputting unit 160 may output prompt information generated based on an operation of a user on a candidate selection area in the second display information.

The prompt outputting unit 160 may output the prompt information based on an operation of a user on a screen displayed according to the second display information described later. As a result, the modification proposal system 100 can perform processing of outputting the prompt information according to an explicit instruction of the user. That is, the modification proposal system 100 can output the prompt information confirmed by the user to the information processing system 300.

The modification proposal information displayed to the user and the modification proposal information included in the prompt information may completely coincide with, partially coincide with, or partially differ from each other. For example, when a sentence of the modification proposal information displayed to the user includes a description of a condition for applying a modification, an instruction such as "to consider" to the user, or the like, words excluding the description can be applied to the prompt information such that the description is not confused with a command to the information processing system 300. In addition, the modification proposal information may be appropriately modified in generating the prompt information. In addition, although it is possible to obtain a modified document according to the modification proposal information displayed to the user, prompt information whose words do not coincide with those of the modification proposal information may be used. In the present specification, such modification proposal information whose words do not coincide with those of the modification proposal information displayed to the user is also referred to as modification proposal information.

A modification policy displayed to the user and words for creating prompt information for obtaining an output according to a modification policy may be stored in a database in association with each other. In other words, the prompt information may be generated by editing a modification policy displayed to the user as described above. When the prompt information is different from the modification policy displayed to the user, the prompt information may be prepared in advance, and stored in a database as modification proposal information in association with, for example, review criterion information or a legal viewpoint so as to be associated with the modification policy displayed to the user.

In addition, the prompt outputting unit 160 may output the prompt information to the user terminal 200. In this case, the user terminal 200 may output the prompt information to the information processing system 300, and acquire modified document unit information generated according to the prompt information from the information processing system 300. Then, the modified document unit acquiring unit 170 described later may acquire the modified document unit information from the user terminal 200.

The modified document unit acquiring unit 170 of the present embodiment acquires the modified document unit information generated according to the prompt information from an external information processing system (for example, information processing system 300), and stores modified document management information regarding the modified document unit information in the storage unit 110.

At this time, the modified document unit acquiring unit 170 may acquire modified document unit information generated according to prompt information according to at least one modification style included in the plurality of modification styles and corresponding to the at least one modification style.

Here, the modified document unit information is, for example, electronic document information obtained by modifying target document unit information according to a modification proposal indicated by modification proposal information. Specifically, when the target document unit information is information indicating a text of a contract, the modified document unit information is, for example, information indicating a modified text modified according to a modification proposal indicated by modification proposal information.

When the modification proposal information includes a plurality of pieces of modification proposal information, the modification proposal system 100 preferably repeats outputting the prompt information and acquiring the modified document unit information by regarding the modified document unit information as the target document unit information according to the number of the plurality of pieces of modification proposal information. Due to the nature of the large language model, when a plurality of instructions are included in one prompt, the quality of output information may be unstable. However, as described above, modified document unit information is output based on prompt information including one piece of modification proposal information or including modification proposal information having a smaller number of pieces of information than the number of pieces of the whole of the modification proposal information, and additional modified document unit information is obtained based on the output and prompt information including modification proposal information that has not yet been reflected therein, whereby modified document unit information with high accuracy can be obtained. As described above, a so-called step-by-step method may be adopted.

Specifically, for example, it is assumed that the modification proposal information includes three pieces of modification proposal information, that is, first modification proposal information, second modification proposal information, and third modification proposal information. In this case, first, the prompt generating unit 150 generates first prompt information based on the target document unit information and the first modification proposal information, and the prompt outputting unit 160 outputs the first prompt information. The modified document unit acquiring unit 170 acquires first modified document unit information generated according to the first prompt information.

Subsequently, the prompt generating unit 150 generates second prompt information based on the first modified document unit information generated according to the first prompt information and the second modification proposal information, and the prompt outputting unit 160 outputs the second prompt information. The modified document unit acquiring unit 170 acquires second modified document unit information generated according to the second prompt information.

Furthermore, the prompt generating unit 150 generates third prompt information based on the second modified document unit information generated according to the second prompt information and the third modification proposal information, and the prompt outputting unit 160 outputs the third prompt information. The modified document unit acquiring unit 170 acquires third modified document unit information generated according to the third prompt information. As a result, the modification proposal system 100 can acquire modified document unit information (in this case, the third modified document unit information) in which a plurality of modification proposals according to the first modification proposal information, the second modification proposal information, and the third modification proposal information are reflected in the target document unit information.

At this time, processing of acquiring the modified document unit information in which the plurality of modification proposals by the prompt generating unit 150, the prompt outputting unit 160, and the modified document unit acquiring unit 170 are reflected may be performed in a mode not displayed on the user terminal 200. That is, on the user terminal 200, for example, generation of the modified document unit information based on the plurality of pieces of modification proposal information, and the content of the modified document unit information (in this case, the third modified document unit information) generated based on the plurality of pieces of modification proposal information are displayed, but at least one of the first prompt information, the first modified document unit information, the second prompt information, the second modified document unit information, and the third prompt information does not have to be displayed. As a result, the user can receive only display of the final modified document unit information, and the user can acquire so-called modified document unit information in which a plurality of modification proposals are collectively reflected.

At this time, the modification proposal system 100 can repeat, based on type information regarding the type of modification included in the modification proposal information, outputting the prompt information and acquiring the modified document unit information in order according to the type indicated by the type information.

Here, the type includes, for example, "addition", "modification", "missing", "deletion", and a combination thereof. The "addition" indicates, for example, that words should be added, and the "modification" indicates, for example, that words should be modified. The "missing" indicates that a certain content (for example, a legal viewpoint) to be described in the target document unit information is not described in the target document unit information and the content should be described, and the "deletion" indicates deletion from the target document unit information. In addition, the combination of these indicates that a plurality of types of processing should be performed on one target document unit information.

The degree of modification varies depending on a type. For example, in the "missing", words are added for each legal viewpoint as compared with other types, and thus the number of characters to be added is large in many cases, and the degree of modification is large. Therefore, for example, the modification proposal system 100 can repeat outputting the prompt information and acquiring the modified document unit information in descending order of the degree of modification, and can repeat outputting the prompt information and acquiring the modified document unit information in ascending order of the degree of modification. As a result, accuracy of the modified document unit information acquired from the information processing system 300 can be improved.

In addition, modification of a style including correction and variation in spelling (for example, "modification to unify notations") is preferably performed after modification of another type. For example, the modification is preferably performed on modified document unit information after the modification proposal information is reflected therein. In addition, the modification of a style including correction and variation in spelling is preferably performed on a plurality of pieces of divided target document unit information at once or on the entire review target document information.

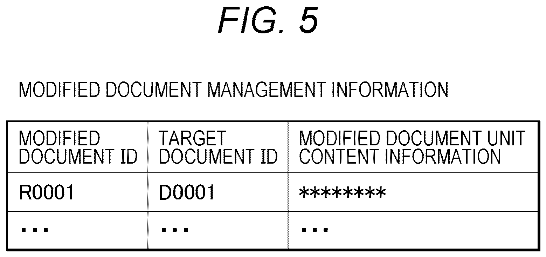

Fig. 5 is a diagram illustrating an example of modified document management information stored in the storage unit 110. The modified document management information stored in the storage unit 110 includes, for example, a modified document ID, a target document ID, and modified document unit content information. The modified document ID is information for identifying modified document unit information to be processed in the modification proposal system 100. The modified document unit content information is information indicating the content of the modified document unit information. As described above, the modified document unit information (so-called document information after modification) and the target document unit information (so-called document information before modification) may be managed in the storage unit 110 in association with each other.

In addition, the modification proposal system 100 may store the prompt information and the modified document unit information in association with each other. In addition, the modification proposal system 100 may store the target document unit information before modification, the prompt information, and the document information after modification, the document being modified by a user based on the modified document unit information, in association with each other. Then, the prompt generating unit 150 may generate the prompt information based on a correspondence relationship between the prompt information and the modified document unit information or the document information after modification (for example, based on a rule or by machine learning). As a result, the modification proposal system 100 can generate highly accurate prompt information capable of generating modified document unit information more desired by a user.

The display information generating unit 180 of the present embodiment generates first display information for displaying the modified document unit information on the user terminal 200.

In addition, the display information generating unit 180 can generate first display information for displaying the target document unit information and the modified document unit information on the user terminal 200. At this time, the display information generating unit 180 can generate the first display information for displaying a difference between the target document unit information and the modified document unit information in a mode different from that of a portion other than the difference. As a result, a user can easily grasp a portion modified in the modified document unit information.

In addition, the display information generating unit 180 can generate second display information for displaying the prompt information generated by the prompt generating unit 150 on the user terminal 200.

In addition, the display information generating unit 180 can generate second display information for displaying a candidate selection area for selecting a candidate for at least a part of the content of the prompt information.

The candidate for at least a part of the content of the prompt information may be, for example, a candidate for a fixed phrase included in the prompt information. By selecting a candidate displayed in the candidate selection area, a user can easily generate the prompt information corresponding to the candidate.

Furthermore, the display information generating unit 180 can generate the second display information for displaying a style selection area for selecting a modification style. By selecting a modification style displayed in the style selection area, a user can easily generate prompt information corresponding to the modification style.

The display information outputting unit 190 of the present embodiment outputs display information (at least one of the first display information and the second display information) generated by the display information generating unit 180. The display information outputting unit 190 can output the display information, for example, to the user terminal 200.

Fig. 6 is a diagram illustrating an example of the first display information displayed on the user terminal 200.

The screen illustrated in Fig. 6 includes an area 610 for displaying target document unit information, an area 620 for displaying modification proposal information for each unit (for example, each article), and an area 630 for displaying modified document unit information. The screen illustrated in Fig. 6 may be, for example, a screen on a browser displayed on the user terminal 200.

In the area 610, for example, the content of review target document information is displayed. In the present embodiment, contract information including the target document unit information, and in the present embodiment, the entire text of non-disclosure agreement are displayed. At this time, a scroll bar or the like is appropriately displayed in the area 610. The area 610 may display a difference between the target document unit information and the modified document unit information in a mode different from that of a portion other than the difference. The different mode includes, but is not limited to, for example, displaying the difference in a highlighted manner, more specifically, displaying the difference and a portion other than the difference with different thicknesses, fonts, or colors of characters or displaying a rectangle having a predetermined color such as a highlight superimposed on the content, making a color of a background in a range of a text, a cell, or the like different, and performing inconspicuous display such as reducing a contrast between characters that are not the difference and the background.

In addition, the content of the review target document displayed in the area 610 may be editable in the area 610. That is, the area 610 may function as a so-called online editor.

In the area 620 of the present embodiment, for example, information regarding a modification policy (for example, a message prompting a user to perform consideration or modification and a sample sentence) is displayed as modification proposal information. The modification proposal information may be displayed for each predetermined unit (for example, an article). In the present embodiment, for the description of Article 4, pointed out matters based on a legal viewpoint and a fixed phrase that can eliminate the pointed out matters are displayed as sample sentences. In addition, at least a part of the sample sentences (for example, words important for review, such as a description that eliminates a risk included in the target document unit information from a legal viewpoint) may be displayed in a highlighted manner (for example, highlight display). In addition, a plurality of sample sentences may be prepared. As a result, it is possible to contribute to the user's consideration or modification. In addition, when the sample sentence is included in the prompt information, it is expected that a different output can be obtained.

The area 620 of the present embodiment further includes an area 621 for displaying a button for switching between display and non-display of the modification proposal information. When a user selects a button in the area 621, the area 620 is switched between display and non-display. In addition, display and non-display of at least a part of information (for example, a sample sentence) displayed in the area 620 may be switched by selection of a button displayed in the area 621. Note that the area 620 may include both a button for switching between display and non-display of the modification proposal information and a button for switching between display and non-display of at least a part of information (for example, a sample sentence) displayed in the area 620.

The area 630 of the present embodiment includes, for example, an area 631 for displaying the modified document unit content information, an area 632 for displaying a button for switching display of a difference between the target document unit information and the modified document unit information, an area 633 for displaying a button for copying the modified document unit content information (for example, copying the information to a clipboard), and an area 634 for displaying a button for instructing reacquisition of the modified document unit information.

The area 631 may display a difference between the target document unit information and the modified document unit information in a mode different from that of a portion other than the difference. The different mode includes, but is not limited to, for example, displaying the difference in a highlighted manner, more specifically, displaying the difference and a portion other than the difference with different thicknesses, fonts, or colors of characters or displaying a rectangle having a predetermined color such as a highlight superimposed on the content, making a color of a background in a range of a text, a cell, or the like different, and performing inconspicuous display such as reducing a contrast between characters that are not the difference and the background. In addition, in the display in a different mode in the area 631, display in a different mode may be performed or does not have to be performed according to an operation of a user on the area 632 indicating an instruction to change display of the difference. Note that the target document unit information and the modified document unit information are preferably displayed side by side vertically or horizontally. This makes it easy to grasp the difference. At this time, the target document unit information and the modified document unit information may be displayed in different windows or pop-up.

In addition, when a button displayed in the area 634 is selected, the modification proposal system (particularly the prompt outputting unit 160) may output prompt information of the same or similar purpose to the information processing system 300 again. Since the information processing system 300 may output different outputs for the same input (in this case, prompt information), the modification proposal system 100 can thereby acquire different modified document unit information. In addition, when a button for instructing generation again, the button being displayed in the area 634, is selected, the modification proposal system 100 may output second display information described later to the user terminal 200. As a result, the modification proposal system 100 can receive an instruction to generate and output the prompt information from the user again.

In addition, at this time, the prompt generating unit 150 may generate the prompt information based on the modification proposal information displayed in the area 620. That is, the prompt generating unit 150 can generate the prompt information based on the modification proposal information displayed in the area 620 by an operation of the button displayed in the area 621. As a result, the user can select modification proposal information to be reflected in the target document unit information and receive acquisition of the modified document unit information based on the selected modification proposal information.

In the present embodiment, the user modifies the target document unit information by referring to the modified document unit information displayed according to the first display information. For example, the user selects the area 633, copies the modified document unit information to a clipboard, pastes the modified document unit information to an appropriate position of the target document unit information displayed in the area 610 or the same content as the review target document information (for example, a file stored in the user terminal), and modifies the content of the target document unit information. Note that, at this time, all the contents displayed in the area 633 (for example, a full text) may be copied to the clipboard, or a content in a range selected by the user may be copied.

In addition, for example, the modification proposal system 100 may automatically perform a modification (reflection/replacement in target document unit information) according to acquisition of the modified document unit information, or may perform a modification according to an operation such as clicking a button displayed on the screen. When the modification proposal system 100 performs a modification, the modification proposal system 100 may perform a modification in a form of leaving a modification history. In addition, at this time, the modification proposal system 100 may perform a modification such that the number of modification history portions is reduced. Specifically, the modification proposal system 100 acquires a difference between a sentence of the target document unit information and a sentence of the modified document unit information, and modifies only the difference (addition, deletion, replacement, and the like). As a result, a user, particularly a user who is not involved in prompt generation processing and refers to a final modification result, can easily grasp a modified portion.

Note that the area 630 may be displayed in a second window different from a first window in which the area 610 and the area 620 are displayed. In addition, the first window and the second window may be displayed so as to overlap with each other, and for example, the second window may be displayed on the first window so as to overlap with a part of the first window. The second window, the area 620, or the area 630 may be displayed as pop-up.

In addition, modification proposal information may be further displayed for the modified document unit content information displayed in the area 631. As a result, before the target document unit information is modified, the user can grasp a problem and a risk when the target document unit information is modified to the modified document unit content information. Note that the modification proposal information for the modified document unit content information may be generated by the modification proposal system 100 or an external information processing system (for example, a modification proposal information generating system).

In addition, although only one piece of the modified document unit information is displayed on the screen illustrated in Fig. 6, a plurality of pieces of modified document unit information may be displayed. At this time, the plurality of pieces of modified document unit information may be modified document unit information generated based on the same prompt information, or may be modified document unit information generated based on different prompt information (for example, prompt information according to a different modification style). As a result, the user can compare the plurality of pieces of modified document unit information.

In addition, the screen illustrated in Fig. 6 may further include an area for acquiring feedback from the user for the modified document unit information. As a result, the modification proposal system 100 can acquire feedback on the modified document unit information from the user, and can improve a user satisfaction level in generation of the modified document unit information.

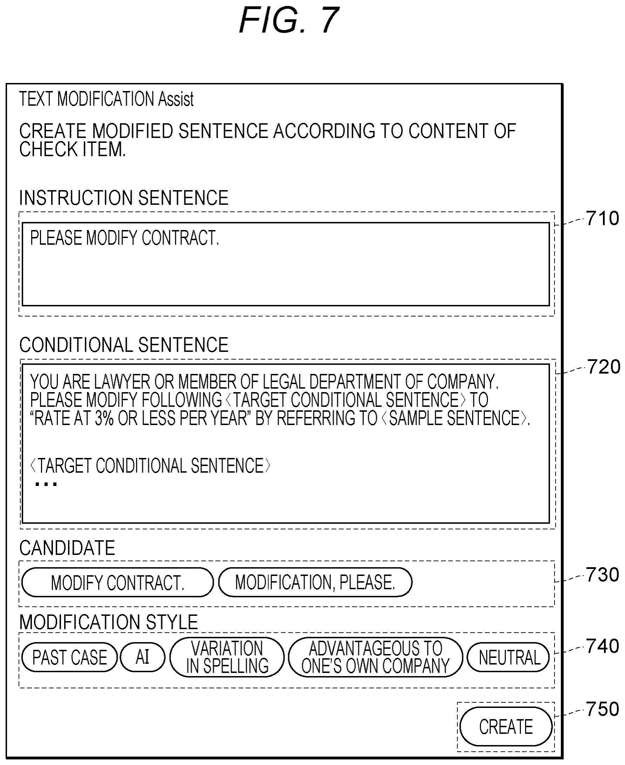

In the present embodiment, the content of an instruction sentence included in prompt information may be displayed. Fig. 7 is a diagram illustrating an example of the second display information displayed on the user terminal 200.

The screen illustrated in Fig. 7 includes an area 710 for displaying the content of an instruction sentence included in prompt information, an area 720 for displaying the content of a conditional sentence included in the prompt information, an area 730 for selecting a candidate for at least a part of the content of the prompt information, an area 740 for selecting a modification style, and an area 750 for displaying a button for instructing an output of the prompt information.

The instruction sentence displayed in the area 710 of the present embodiment is an instruction sentence for the information processing system 300. The conditional sentence displayed in the area 720 is a conditional sentence indicating a condition of modified document unit information generated in the information processing system 300. For example, the prompt generating unit 150 generates prompt information obtained by combining an instruction sentence displayed in the area 710 and a conditional sentence displayed in the area 720.

For example, the user can edit the content of the area 710 or the area 720. As a result, the user can generate prompt information expected to generate appropriate modified document unit information. In the area 720, a basic conditional sentence of the prompt information or target document unit information to be modified ("target text" in Fig. 7) is preferably input and displayed in advance for convenience of the user. Since the prompt information input to the large language model of the present embodiment is a natural language, the user can easily edit the prompt information and add a conditional sentence.

At this time, the modification proposal system 100 may analyze the content of the area 710 or the area 720 (prompt content analysis) and generate the first display information or the prompt information based on the analysis result. The above prompt content analysis performed by the modification proposal system 100 may evaluate, for example, that predetermined processing is not performed based on the prompt information or that a predetermined text is not included in the prompt information. This can avoid, for example, outputting prompt information including an inappropriate content, thereby avoiding a so-called prompt injection attack and improving system safety. In addition, in order to avoid an inappropriate output due to prompt information input by the user, the modification proposal system 100 may add auxiliary prompt information to the prompt information created by the user, and use the obtained prompt information as prompt information as an input of the information processing system 300. In addition, the modification proposal system 100 may analyze the prompt content regardless of whether or not the prompt information can be edited or is edited by the user. As a result, even when the user cannot edit the prompt information or even when the user does not edit the prompt information, it is possible to avoid a prompt injection attack and to improve system safety.

In the present embodiment, when the user selects candidate prompt information displayed in the area 730, the selected sentence or a sentence corresponding to the selected content is displayed in the area 710 or the area 720. As a result, the user can easily create an instruction sentence or a conditional sentence by selecting a candidate without directly inputting characters in the area 710 and the area 720. In addition, in an embodiment in which at least one of the area 710 and the area 720 is not displayed, the user can easily transmit prompt information to the information processing system 300 by selecting candidate prompt information.

In addition, when the user selects a modification style displayed in the area 740, the content displayed in the area 710 or the area 720 may be changed to an instruction sentence or a conditional sentence according to the selected modification style. As a result, the user can easily create an instruction sentence or a conditional sentence by selecting a modification style without directly inputting characters in the area 710 and the area 720.

In addition, when the user selects a button for instructing generation of a sentence based on the prompt information displayed in the area 750, the instruction sentence displayed in the area 710 and the conditional sentence displayed in the area 720 are combined, prompt information including prompt injection-corresponding words for avoiding prompt injection is generated, and the generated prompt information is output to the information processing system 300. Note that the instruction sentence displayed in the area 710 and the conditional sentence displayed in the area 720 may be a sentence that has undergone the above prompt content analysis or may be a sentence that has not undergone the above prompt content analysis. The information processing system 300 generates modified document unit information based on the prompt information and outputs the modified document unit information to the modification proposal system 100. As described above, in the present embodiment, the user selects a button displayed in the area 750 by referring to the area 710 and the area 720, thereby outputting the prompt information. As a result, the modification proposal system 100 can perform processing of outputting the prompt information according to an explicit instruction of the user.

The screen illustrated in Fig. 7 may be displayed, for example, as a window (for example, a third window) different from the first window or the second window including the area 610 in which target document unit information is displayed. The first window and the third window may be displayed so as to overlap with each other, and for example, the third window may be displayed on the first window so as to overlap with a part of the first or second window.

In addition, the screen illustrated in Fig. 7 may further include an area for acquiring feedback from the user for the generated prompt information. As a result, the modification proposal system 100 can acquire feedback on the generated prompt information from the user, and can improve a user satisfaction level in generation of the prompt information.

Note that, in the present embodiment, the button displayed on the screen is an example of a user interface, and may be, for example, an icon.

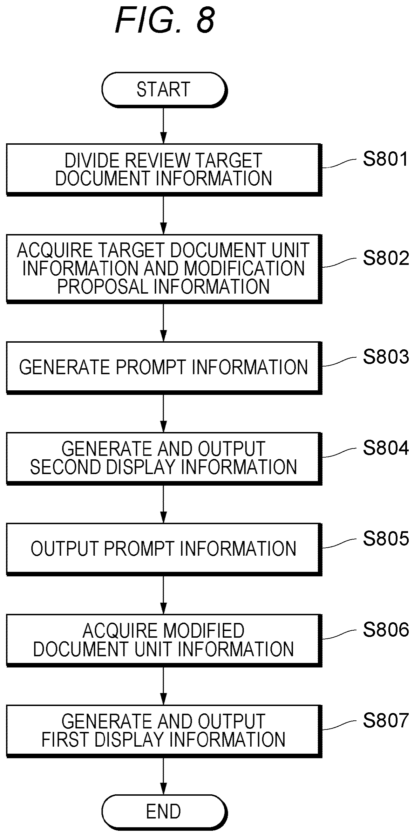

Fig. 8 is a flowchart illustrating an example of processing in the modification proposal system 100.

First, the division unit 120 acquires review target document information and divides the review target document information into predetermined units (S801). The target document unit acquiring unit 130 acquires target document unit information obtained by dividing the review target document information into predetermined units, and the modification proposal acquiring unit 140 acquires modification proposal information (S802). The prompt generating unit 150 generates prompt information based on the target document unit information and the modification proposal information (S803).

The display information generating unit 180 generates and outputs second display information for displaying the prompt information on the user terminal 200 (S804). At this time, the prompt generating unit 150 may generate the prompt information again based on an operation of a user on a screen displayed according to the second display information, and the display information generating unit 180 may generate the second display information again. Note that processing of outputting the second display information (S804) does not have to be performed.

The prompt outputting unit 160 outputs the prompt information to the information processing system 300 (S805). At this time, the prompt outputting unit 160 may output the prompt information based on an operation of a user on a screen displayed according to the second display information.

The modified document unit acquiring unit 170 acquires modified document unit information generated according to the prompt information from the information processing system 300 (S806). The display information generating unit 180 generates and outputs first display information for displaying the modified document unit information on the user terminal 200 (S807). The user modifies the review target document information using the output modified document unit information.

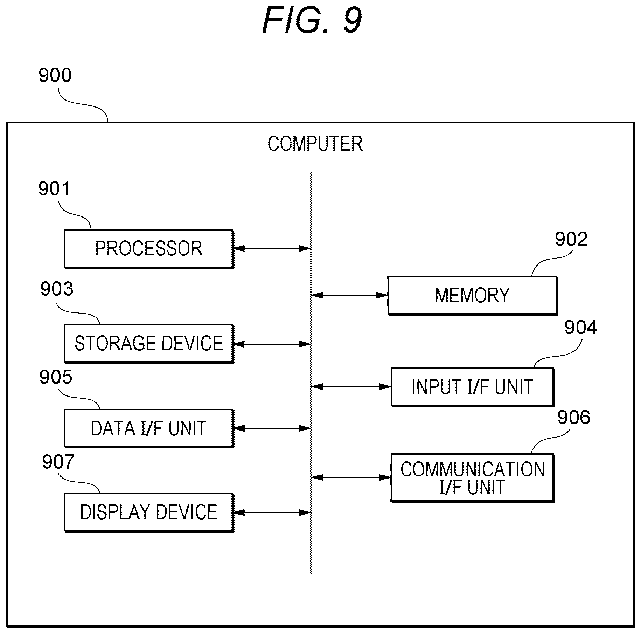

Next, an example of a hardware configuration in a case where the modification proposal system 100 is implemented by a computer 900 will be described with reference to Fig. 9. Fig. 9 is a diagram illustrating an example of a hardware configuration of the computer 900.

As illustrated in Fig. 9, the computer 900 includes, for example, a processor 901, a memory 902, a storage device 903, an input I/F unit 904, a data I/F unit 905, a communication I/F unit 906, and a display device 907.

The computer 900 may be, for example, a server computer, a personal computer (for example, a desktop, a laptop, or a tablet), a media computer platform (for example, a cable, a satellite set-top box, or a digital video recorder), a handheld computer device (for example, a PDA or an e-mail client), or another type of computer or communication platform.

The processor 901 is a control unit that controls various types of processing in the computer 900 by executing a program stored in the memory 902.

The memory 902 is, for example, a storage medium such as a random access memory (RAM). The memory 902 temporarily stores a program code of a program executed by the processor 901 and data required at the time of executing the program.

The storage device 903 is, for example, a nonvolatile storage medium such as a hard disk drive (HDD) or a flash memory. The storage device 903 stores an operating system and various programs for implementing the above configurations.

The input I/F unit 904 is a device for receiving an input from a user. The input I/F unit 904 is, for example, a keyboard, a mouse, a touch panel, various sensors, or a wearable device. The input I/F unit 904 may be connected to the computer 900 via, for example, an interface such as a universal serial bus (USB).

The data I/F unit 905 is a device for inputting data from the outside of the computer 900. The data I/F unit 905 is, for example, a drive device for reading data stored in various storage media. The data I/F unit 905 may be provided outside the computer 900. In a case where the data I/F unit 905 is provided outside the computer 900, the data I/F unit 905 is connected to the computer 900 via, for example, an interface such as USB.

The communication I/F unit 906 is a device for performing data communication via a network such as the Internet with a device outside the computer 900 in a wired or wireless manner. The communication I/F unit 906 may be provided outside the computer 900. In a case where the communication I/F unit 906 is provided outside the computer 900, the communication I/F unit 906 is connected to the computer 900 via, for example, an interface such as USB.

The display device 907 is a device for displaying various types of information. The display device 907 is, for example, a liquid crystal display, an organic electroluminescence (EL) display, or a display of a wearable device. The display device 907 may be provided outside the computer 900. In a case where the display device 907 is provided outside the computer 900, the display device 907 is connected to the computer 900 via, for example, a display cable. In addition, in a case where a touch panel is adopted as the input I/F unit 904, the display device 907 may be integrated with the input I/F unit 904.

The embodiment of the present invention has been described above. The modification proposal system 100 can acquire target document unit information and modification proposal information, output prompt information for generating modified document unit information to the information processing system 300, and acquire the modified document unit information from the information processing system 300. As a result, the modification proposal system 100 can make a highly convenient modification proposal to a user.

In addition, the modification proposal system 100 can output prompt information according to at least one modification style and acquire modified document unit information corresponding to the at least one modification style. As a result, a user can acquire appropriate modified document unit information according to a modification style.

In addition, the modification proposal system 100 can output first display information for displaying the modified document unit information on the user terminal 200. As a result, a user can perform modification work of the target document unit information by referring to the modified document unit information.

In addition, the modification proposal system 100 can output first display information for displaying a difference between the target document unit information and the modified document unit information to the user terminal 200 in a mode different from that of a portion other than the difference. As a result, a user can easily grasp a portion modified in the modified document unit information.

In addition, the modification proposal system 100 can repeat outputting the prompt information and acquiring the modified document unit information by regarding the modified document unit information as the target document unit information according to the number of pieces of the modification proposal information. As a result, the modification proposal system 100 can acquire the modified document unit information subjected to modification according to the plurality of pieces of modification proposal information.

In addition, the modification proposal system 100 can repeat outputting the prompt information and acquiring the modified document unit information in order according to the type of the modification proposal information. As a result, the modification proposal system 100 can acquire more appropriate modified document unit information.

In addition, the modification proposal system 100 can output second display information for displaying the prompt information on the user terminal 200, and can output the prompt information based on an operation of a user on a screen displayed according to the second display information. As a result, the modification proposal system 100 can perform processing of outputting the prompt information according to an explicit instruction of the user.

In addition, the modification proposal system 100 can output second display information for displaying a candidate selection area for selecting a candidate for at least a part of the content of the prompt information, and can output the prompt information generated based on an operation of a user on the candidate selection area to the information processing system 300. As a result, the user can easily create the prompt information.

In addition, the modification proposal system 100 can output second display information for displaying a style selection area for selecting a modification style, and can output prompt information generated based on an operation of a user on the style selection area. As a result, a user can easily create prompt information according to a modification style.

Note that the present embodiment is intended to facilitate understanding of the present invention, and is not intended to interpret the present invention in a limited manner. The present invention can be changed or improved without departing from the gist thereof, and the present invention also includes equivalents thereof.

In addition, in the present invention, a "unit" does not simply mean a physical means, but includes a case where a function of the "unit" is implemented by software. In addition, a function of one "unit" or device may be implemented by two or more physical means, devices, or pieces of software, and functions of two or more "units" or devices may be implemented by one physical unit, device, or piece of software.

### Reference Signs List

- 100: Modification proposal system
- 110: Storage unit
- 120: Division unit
- 130: Target document unit acquiring unit
- 140: Modification proposal acquiring unit
- 150: Prompt generating unit
- 160: Prompt outputting unit
- 170: Modified document unit acquiring unit
- 180: Display information generating unit
- 190: Display information outputting unit
- 200: User terminal
- 300: Information processing system

## Claims

1. A modification proposal method executed by a processor, the method comprising:
generating, based on target document unit information obtained by dividing review target document information to be reviewed into predetermined units and modification proposal information regarding a modification proposal for the target document unit information, prompt information for generating modified document unit information according to the modification proposal, and outputting the prompt information to an external information processing system; and
acquiring the modified document unit information generated according to the prompt information from the external information processing system.

2. The modification proposal method according to claim 1, further comprising:
dividing the review target document information into a plurality of pieces of target document unit information; and
acquiring modification proposal information for each of the plurality of pieces of target document unit information obtained by the division, wherein
the output includes generating the prompt information according to each of the plurality of pieces of target document unit information and the modification proposal information, and outputting the prompt information to the external information processing system.

3. The modification proposal method according to claim 1, wherein the predetermined unit includes at least one of an article, a clause, a subclause, and a paragraph.

4. The modification proposal method according to claim 1, wherein
outputting the prompt information includes outputting the prompt information according to at least one modification style included in a plurality of modification styles, and
acquiring the modified document unit information includes acquiring the modified document unit information corresponding to the at least one modification style.

5. The modification proposal method according to claim 1, further comprising outputting first display information for displaying the modified document unit information on a user terminal.

6. The modification proposal method according to claim 5, comprising displaying the first display information for displaying a difference between the target document unit information and the modified document unit information on the user terminal in a mode different from that of a portion other than the difference.

7. The modification proposal method according to claim 1, wherein
the modification proposal information includes a plurality of pieces of modification proposal information, and
the modification proposal method further comprises sequentially repeating outputting the prompt information and acquiring the modified document unit information by regarding the modified document unit information as the target document unit information according to the number of the plurality of pieces of modification proposal information.

8. The modification proposal method according to claim 7, wherein
the plurality of pieces of modification proposal information includes type information regarding a type of modification, and
the repetition includes repetition in order according to the type.

9. The modification proposal method according to claim 1, further comprising outputting second display information for displaying the prompt information on a user terminal, wherein
outputting the prompt information includes outputting the prompt information based on an operation of a user on a screen displayed according to the second display information.

10. The modification proposal method according to claim 9, wherein
the second display information includes second display information for displaying a candidate selection area for selecting a candidate for at least a part of a content of the prompt information, and
outputting the prompt information includes outputting the prompt information generated based on an operation of the user on the candidate selection area.

11. The modification proposal method according to claim 9, wherein
the second display information includes second display information for displaying a style selection area for selecting a modification style, and
outputting the prompt information includes outputting the prompt information generated based on an operation of the user on the style selection area.

12. The modification proposal method according to claim 1, wherein the external information processing system generates modified document unit information based on the prompt information and a large language model.

13. A modification proposal system comprising at least one processor, wherein
the at least one processor
generates, based on target document unit information obtained by dividing review target document information to be reviewed into predetermined units and modification proposal information regarding a modification proposal for the target document unit information, prompt information for generating modified document unit information according to the modification proposal, and outputs the prompt information to an external information processing system, and
acquires the modified document unit information generated according to the prompt information from the external information processing system.

14. A modification proposal program for causing a processor to execute:
generating, based on target document unit information obtained by dividing review target document information to be reviewed into predetermined units and modification proposal information regarding a modification proposal for the target document unit information, prompt information for generating modified document unit information according to the modification proposal, and outputting the prompt information to an external information processing system; and
acquiring the modified document unit information generated according to the prompt information from the external information processing system.
